# EUROPÄISCHE PATENTSCHRIFT

(11) **EP 3 933 180 B1**
(45) Veröffentlichungstag und Bekanntmachung des Hinweises auf die Patenterteilung: **19.06.2024**
(21) Anmeldenummer: 21178463.2
(22) Anmeldetag: 09.06.2021
(51) Int. Cl.: F02B 37/00, B63B 1/38

(54) **SCHIFFSANTRIEBSSYSTEM UND VERFAHREN ZUM BETREIBEN DESSELBEN**
PROPULSION SYSTEM FOR SHIPS AND METHOD FOR OPERATING SAME
SYSTÈME DE PROPULSION DE BATEAU ET SON PROCÉDÉ DE FONCTIONNEMENT

(30) Priorität: 01.07.2020 DE 102020117399
(43) Veröffentlichungstag der Anmeldung: 05.01.2022
(73) Patentinhaber: MAN Energy Solutions SE, 86153 Augsburg (DE)
(72) Erfinder: Lauterbach, Johannes, 86343 Königsbrunn (DE)

(56) Entgegenhaltungen:
- EP-A1- 2 272 747
- WO-A1-2014/058008
- JP-A- 2001 097 276
- KR-A- 20200 027 719

## Beschreibung

Die Erfindung betrifft ein Schiffsantriebssystem. Des Weiteren betrifft die Erfindung ein Verfahren zum Betreiben eines Schiffsantriebssystems.

Ein Schiffsantriebssystem verfügt über mindestens eine Brennkraftmaschine. Die jeweilige Brennkraftmaschine verfügt über Zylinder, in welchen ein Kraftstoff verbrannt wird. Bei der Verbrennung des Kraftstoffs entsteht Abgas. Die jeweilige Brennkraftmaschine wirkt mit mindestens einen Abgasturbolader zusammen. Ein Abgasturbolader verfügt über eine Turbine und einen Verdichter. Abgas der Zylinder wird in der Turbine des jeweiligen Abgasturboladers entspannt, wobei bei der Entspannung des Abgases in der Turbine des jeweiligen Abgasturboladers gewonnene Energie genutzt wird, um den Verdichter des jeweiligen Abgasturboladers zur Verdichtung von den Zylindern zuzuführender Ladeluft anzutreiben. Die jeweilige Brennkraftmaschine kann zum Beispiel einen Generator antreiben, um elektrische Energie zu erzeugen, die dann genutzt wird, um über mindestens eine elektrische Maschine mindestens einen Schiffspropeller anzutreiben. Es ist auch möglich, über die mindestens eine Brennkraftmaschine einen Schiffspropeller direkt anzutreiben.

Ein Schiffsantriebssystem verfügt weiterhin über ein Luftschmierungssystem. Ein solches Luftschmierungssystem wird auch als Air Lubrication System bezeichnet. Über ein solches Luftschmierungssystem werden Luftblasen unter einen Schiffsboden des Schiffs ausgestoßen, wobei diese Luftblasen den Schiffswiderstand reduzieren und so die Reibung des Schiffs im Wasser. Um die Luft für das Luftschmierungssystem zu erzeugen, verfügt ein Luftschmierungssystem typischerweise über elektrisch angetriebene Kompressoren, welche die benötigte Druckluft bereitstellen. Zum Antreiben der Kompressoren wird viel Energie benötigt. Folgende Publikationen zeigen Luftschmierungssysteme für Schiffsantriebsysteme: EP 2 272 747 A1 oder JP 2001 097276 A.

Hiervon ausgehend liegt der vorliegenden Erfindung die Aufgabe zugrunde, ein neuartiges Schiffsantriebssystem und ein Verfahren zum Betreiben eines Schiffsantriebssystems zu schaffen.

Diese Aufgabe wird durch ein Schiffsantriebssystem nach Anspruch 1 gelöst.

Erfindungsgemäß ist die jeweilige Brennkraftmaschine mit dem Luftschmierungssystem über eine Abzweigleistung derart gekoppelt, dass das Abgas der Zylinder dem Luftschmierungssystem zuführbar ist, und dass über die Düsen des Luftschmierungssystems als Luftblasen Abgasblasen unter den Schiffsboden ausstoßbar sind.

Mit der Erfindung wird erstmals vorgeschlagen, Abgas der Brennkraftmaschine einem Luftschmierungssystem zuzuführen und Abgas über die Düsen des Luftschmierungssystems in Form von Luftblasen, nämlich Abgasblasen, unter den Schiffsboden auszustoßen und demnach in das Wasser zu blasen. Der Energiebedarf des Luftschmierungssystems kann so reduziert werden.

Erfindungsgemäß steht die Abzweigleitung derart mit einem Wastegate in Wirkverbindung, dass bei geschlossenem Wastegate die Abzweigleitung verschlossen ist, und dass bei geöffnetem Wastegate die Abzweigleitung geöffnet ist, um bei geöffnetem Wastegate überschüssiges Abgas dem Luftschmierungssystem zuzuführen. Dann, wenn in den Zylindern der mindestens einen Brennkraftmaschine mehr Abgas erzeugt wird als im Bereich der Turbine des jeweiligen Abgasturboladers genutzt wird, wird dieses überschüssige Abgas bei geöffnetem Wastegate dem Luftschmierungssystem zugeführt. Fällt hingegen im Bereich der mindestens einen Brennkraftmaschine kein überschüssiges Abgas an, so wird das Abgas bei geschlossenem Wastegate ausschließlich über den jeweiligen Abgasturbolader geführt.

Nach einer Weiterbildung der Erfindung weist das Luftschmierungssystem mindestens einen Kompressor auf, über welchen Luft für das Luftschmierungssystem komprimierbar ist. Der mindestens eine Kompressor ist dann betreibbar, wenn das Wastegate geschlossen ist, oder wenn bei geöffnetem Wastegate die über die Abzweigleitung strömende Abgasmenge oder deren Abgasdruck zu gering ist. Sollte im Bereich der mindestens einen Brennkraftmaschine nicht genug überschüssiges Abgas anfallen, um ausschließlich über das Abgas das Luftschmierungssystem zu betreiben, so kann über den mindestens einen Kompressor zusätzlich verdichtete Luft für das Luftschmierungssystem erzeugt werden.

Die mindestens eine Brennkraftmaschine ist vorzugsweise ein Gasmotor oder ein in einem Gasmodus betriebener Dual-Fuel-Motor. Die Erfindung findet vor allem bei Gasmotoren und bei im Gasmodus betriebenen Dual-Fuel-Motoren eines Schiffsantriebssystems Verwendung. Bei der Verbrennung eines gasförmigen Kraftstoffs kann das Abgas ohne Abgasnachbehandlung über das Luftschmierungssystem geführt werden.

Das Verfahren zum Betreiben eines Schiffsantriebssystems ist in Anspruch 7 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

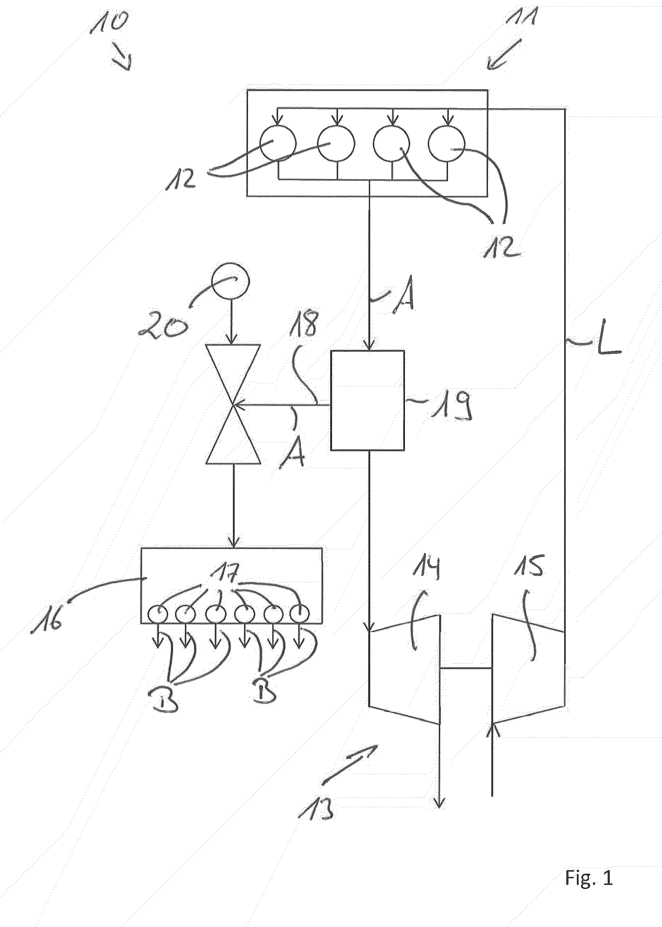

- Fig. 1:: ein Schema eines Ausschnitts aus einem Schiffsantriebssystem.

Fig. 1 zeigt stark schematisiert ein Schiffsantriebssystem 10 eines Schiffs.

So zeigt Fig. 1 eine Brennkraftmaschine 11 mit mehreren Zylindern 12. In den Zylindern 12 der Brennkraftmaschine 11 wird Kraftstoff verbrannt. Bei der Verbrennung des Kraftstoffs entsteht in den Zylindern 12 Abgas A, welches einem Abgasturbolader 13 zugeführt werden kann. Der Abgasturbolader 13 verfügt über eine Turbine 14 und einen Verdichter 15. Abgas A, welches der Turbine 14 des Abgasturboladers 13 ausgehend von den Zylindern 12 der Brennkraftmaschine 11 zugeführt wird, wird in der Turbine 14 entspannt. Hierbei wird mechanische Energie gewonnen, die dazu genutzt wird, um den Verdichter 15 des jeweiligen Abgasturboladers 13 anzutreiben und so den Zylindern 12 der Brennkraftmaschine 11 zur Verbrennung des Kraftstoffs verdichtete Ladeluft L zur Verfügung zu stellen.

Fig. 1 zeigt weiterhin ein Luftschmierungssystem 16. Das Luftschmierungssystem 16 verfügt über mehrere Düsen 17, mithilfe derer Luftblasen B unter einen Schiffsboden geblasen bzw. ausgestoßen werden können, um den Schiffswiderstand, also die Reibung des Schiffs im Wasser, zu reduzieren.

Im Sinne der hier vorliegenden Erfindung ist die jeweilige Brennkraftmaschine 11 mit dem Luftschmierungssystem 16 über eine Abzweigleitung 18 gekoppelt, derart, dass das Abgas A der Zylinder 12 dem Luftschmierungssystem 16 zuführbar ist, um das Abgas A über die Düsen 17 des Luftschmierungssystems 16 als Abgasblasen unter den Schiffsboden zu blasen bzw. auszustoßen.

Die Erfindung kommt insbesondere dann zum Einsatz, wenn es sich bei der Brennkraftmaschine 11 um einen Gasmotor oder um einen im Gasmodus betriebenen Dual-Fuel-Motor handelt, in welchem als gasförmiger Kraftstoff zum Beispiel Erdgas verbrannt wird. Bei der Verbrennung eines solchen gasförmigen Kraftstoffs entsteht relativ sauberes Abgas A, welches ohne die Notwendigkeit einer Abgasreinigung über das Luftschmierungssystem 16 geführt und unter den Schiffsboden geblasen oder ausgestoßen werden kann.

Die Abzweigleitung 18 zweigt stromaufwärts der Turbine 14 von einer sich zur Turbine 14 erstreckenden Abgasleitung ab, und zwar im Bereich eines Wastegates 19. Dann, wenn das Wastegate 19 geschlossen ist, strömt sämtliches Abgas A der Zylinder 12 über die Turbine 14 des Abgasturboladers 13. Dann hingegen, wenn das Wastegate 19 geöffnet ist, weil zum Beispiel in der Brennkraftmaschine 12 überschüssiges Abgas anfällt, kann dieses überschüssige Abgas A über die Abzweigleitung 18 abgezweigt und dem Luftschmierungssystem 16 zugeführt werden.

Bei Gasmotoren oder im Gasmodus betriebenen Dual-Fuel-Motoren fällt insbesondere im Volllastbetrieb oder nahe des Volllastbetriebs in den Zylindern 12 der Brennkraftmaschine 11 viel überschüssiges Abgas A an, welches bei dann geöffnetem Wastegate 19 über die Abzweigleitung 18 dem Luftschmierungssystem 16 zugeführt werden kann. Hierbei kann es möglich sein, das Luftschmierungssystem 16 ausschließlich mit Abgas A zu versorgen, um als Luftblasen ausschließlich Abgasblasen unter den Schiffsboden auszustoßen bzw. zu blasen.

Fig. 1 zeigt schematisiert weiterhin einen Kompressor 20 des Luftschmierungssystems 16, welcher typischerweise elektrisch angetrieben wird, um komprimierte Luft für das Luftschmierungssystem 16 bereitzustellen.

Dann, wenn zum Beispiel das Wastegate 19 geschlossen ist oder wenn bei geöffnetem Wastegate 19 die über die Abzweigleitung 18 abgezweigte Abgasmenge oder deren Abgasdruck zu gering ist, um das Luftschmierungssystem 16 ordnungsgemäß zu betreiben, kann über den mindestens einen Kompressor 20 Luft für das Luftschmierungssystem 16 komprimiert werden.

Die Erfindung betrifft das Schiffsantriebssystem 10 sowie ein Verfahren zum Betreiben des Schiffsantriebssystems 10.

Das Verfahren 10 sieht insbesondere vor, dass dann, wenn die jeweilige Brennkraftmaschine 11 mit einer Last betrieben wird, die höher als ein Grenzwert ist, das Wastegate 19 geöffnet und überschüssiges Abgas A stromaufwärts der Turbine 14 des jeweiligen Abgasturboladers 13 abgezweigt und dem Luftschmierungssystem 16 zugeführt wird, um als Luftblasen Abgasblasen unter den Schiffsboden zu blasen.

Ist bei geöffnetem Wastegate 19 oder bei geschlossenem Wastegate 19 eine ordnungsgemäße Versorgung des Luftschmierungssystems 16 nicht möglich, um den Schiffswiderstand wie gewünscht zu reduzieren, so wird der mindestens eine Kompressor 20 angetrieben, um Luft für das Luftschmierungssystem 16 bereitzustellen.

### Bezugszeichenliste

- 10: Schiffsantriebssystem
- 11: Brennkraftmaschine
- 12: Zylinder
- 13: Abgasturbolader
- 14: Turbine
- 15: Verdichter
- 16: Luftschmierungssystem
- 17: Düse
- 18: Abzweigleitung
- 19: Wastegate
- 20: Kompressor

## Patentansprüche

1. Schiffsantriebssystem (10),
mit mindestens einer Brennkraftmaschine (11),
wobei die jeweilige Brennkraftmaschine (11) Zylinder (12) aufweist, in welchen bei der Verbrennung von Kraftstoff Abgas entsteht,
wobei die jeweilige Brennkraftmaschine (11) mit mindestens einem Abgasturbolader (13), der eine Turbine (14) und einen Verdichter (15) aufweist, derart zusammenwirkt, dass das Abgas der Zylinder (12) in der Turbine (14) des jeweiligen Abgasturboladers (13) entspannbar ist, und dass bei der Entspannung des Abgases in der Turbine (14) des jeweiligen Abgasturboladers (13) gewonnene Energie nutzbar ist, um den Verdichter (15) des jeweiligen Abgasturboladers (13) zur Verdichtung von den Zylindern (12) zuzuführender Ladeluft anzutreiben,
mit einem Luftschmierungssystem (16),
wobei das Luftschmierungssystem (16) mehrere Düsen (17) aufweist, über welche Luftblasen unter einen Schiffsboden ausstoßbar sind, um den Schiffswiderstand zu reduzieren,
wobei die jeweilige Brennkraftmaschine mit dem Luftschmierungssystem über eine Abzweigleitung (18) derart gekoppelt ist, dass das Abgas der Zylinder dem Luftschmierungssystem (16) zuführbar ist und über die Düsen (17) desselben als Luftblasen, nämlich Abgasblasen, unter den Schiffsboden ausstoßbar sind **dadurch gekennzeichnet, dass die Abzweigleitung (18) derart mit einem Wastegate (19) in Wirkverbindung steht, dass bei geschlossenem Wastegate (19) die Abzweigleitung (18) verschlossen ist, und dass bei geöffnetem Wastegate (19) die Abzweigleitung (18) geöffnet ist, um überschüssiges Abgas dem Luftschmierungssystem (16) zuzuführen.**

2. Schiffsantriebssystem nach Anspruch 1, **dadurch gekennzeichnet, dass** die mindestens eine Brennkraftmaschine (11) ein Gasmotor oder ein Dual-Fuel-Motor ist, der in einem Gasmodus betrieben wird.

3. Schiffsantriebssystem nach Anspruch 1 oder 2, **dadurch gekennzeichnet, dass** die Abzweigleitung (18) stromaufwärts der Turbine (14) des jeweiligen Abgasturboladers in Richtung auf das Luftschmierungssystem (16) abzweigt.

4. Schiffsantriebssystem nach einem der Ansprüche 1 bis 3, **dadurch gekennzeichnet, dass** das Luftschmierungssystem (16) mindestens einen Kompressor (20) aufweist, um Luft für das Luftschmierungssystem zu komprimieren.

5. Schiffsantriebssystem nach Anspruch 4, **dadurch gekennzeichnet, dass** der mindestens eine Kompressor (20) dann betreibbar ist, wenn das Wastegate (19) geschlossen ist, oder wenn bei geöffnetem Wastegate (19) die über die Abzweigleitung (18) strömende Abgasmenge oder deren Abgasdruck zu gering ist.

6. Verfahren zum Betreiben eines Schiffsantriebssystems (10) **nach Anspruch 1 bis 5,**
wobei in Zylindern (12) mindestens einer Brennkraftmaschine (11) Kraftstoff verbrannt wird und hierbei Abgas entsteht,
wobei das Abgas der Zylinder (12) in einer Turbine (14) mindestens eines Abgasturboladers (13) entspannt und bei der Entspannung des Abgases in der Turbine (14) des jeweiligen Abgasturboladers (13) Energie gewonnen wird, die im Verdichter (15) des jeweiligen Abgasturboladers (13) zur Verdichtung von den Zylindern (12) zuzuführender Ladeluft genutzt wird,
wobei über ein Luftschmierungssystem (16) Luftblasen unter einen Schiffsboden ausgestoßen werden, um den Schiffswiderstand zu reduzieren,
**dadurch gekennzeichnet, dass**
Abgas der Zylinder (12) dem Luftschmierungssystem (16) zugeführt wird, und über die Düsen (17) desselben als Luftblasen, nämlich Abgasblasen, unter den Schiffsboden ausgestoßen werden, wobei jeweilige Brennkraftmaschine mit dem Luftschmierungssystem über eine Abzweigleitung (18) derart gekoppelt ist, dass das Abgas der Zylinder dem Luftschmierungssystem (16) zuführbar ist und über die Düsen (17) desselben als Luftblasen, nämlich Abgasblasen, unter den Schiffsboden ausstoßbar sind.

7. Verfahren nach Anspruch 6, **dadurch gekennzeichnet, dass** die mindestens eine Brennkraftmaschine (11) ein Gasmotor oder ein Dual-Fuel-Motor ist, der in einem Gasmodus betrieben wird.

8. Verfahren nach Anspruch 6 oder 7, **dadurch gekennzeichnet, dass** dann, wenn die jeweilige Brennkraftmaschine (11) mit einer Last betrieben wird, die größer als ein Grenzwert ist, ein Wastegate (19) geöffnet und überschüssiges Abgas stromaufwärts der Turbine (14) des jeweiligen Abgasturboladers (13) abgezweigt und dem Luftschmierungssystem (16) zugeführt wird.

9. Verfahren nach Anspruch 8, **dadurch gekennzeichnet, dass** dann, wenn das Wastegate (19) geschlossen ist, oder wenn bei geöffnetem Wastegate (19) die abgezweigte Abgasmenge oder deren Abgasdruck zu gering ist, über mindestens ein Kompressor (20) des Luftschmierungssystems (16) Luft für das Luftschmierungssystem (16) komprimiert wird.

## Claims

1. A ship propulsion system (10),
having at least one internal combustion engine (11),
wherein the respective internal combustion engine (11) comprises cylinders (12), in which during the combustion of fuel exhaust gas is created,
wherein the respective internal combustion engine (11) interacts with at least one exhaust gas turbocharger (13), which comprises a turbine (14) and a compressor (15), in such a manner that the exhaust gas of the cylinders (12) can be expanded in the turbine (14) of the respective exhaust gas turbocharger (13), and that energy extracted in the turbine (14) of the respective exhaust turbocharger (13) during the expansion of the exhaust gas can be utilised in order to drive the compressor (15) of the respective exhaust turbocharger (13) for compressing charge air to be supplied to the cylinders (12),
having an air lubrication system (16),
wherein the air lubrication system (16) comprises multiple nozzles (17), via which air bubbles can be expelled under a ship's bottom in order to reduce the ship's resistance,
wherein the respective internal combustion engine is coupled to the air lubrication system via a branch line (18) in such a manner that the exhaust gas of the cylinders can be supplied to the air lubrication system (16) and via the nozzles (17) of the same can be expelled as air bubbles, namely exhaust gas bubbles, under the ship's bottom,
**characterised**
**in that** the branch line (18) is operatively connected to a waste gate (19) in such a manner that with closed waste gate (19) the branch line (18) is closed, and that with opened waste gate (19) the branch line (18) is opened in order to supply excess exhaust gas to the air lubrication system (16).

2. The ship's propulsion system according to Claim 1, **characterised in that** the at least one internal combustion engine (11) is a gas engine or a dual-fuel engine that is operated in a gas mode.

3. The ship propulsion system according to Claim 1 or 2, **characterised in that** the branch line (18), upstream of the turbine (14) of the respective exhaust gas turbocharger, branches off in the direction of the air lubrication system (16).

4. The ship propulsion system according to any one of the Claims 1 to 3, **characterised in that** the air lubrication system (16) comprises at least one compressor (20) in order to compress the air for the air lubrication system.

5. The ship propulsion system according to Claim 4, **characterised in that** at least one compressor (20) can be operated in particular when the waste gate (19) is closed, or when, with opened waste gate (19), the exhaust gas quantity or its exhaust gas pressure flowing via the branch line (18) is too low.

6. A method for operating a ship propulsion system (10) according to Claim 1 to 5,
wherein in cylinders (12) of at least one internal combustion engine (11) fuel is combusted and exhaust gas produced in the process,
wherein the exhaust gas of the cylinders (12) is expanded in a turbine (14) of at least one exhaust gas turbocharger (13) and during the expansion of the exhaust gas in the turbine (14) of the respective exhaust gas turbocharger (13), energy is extracted which is utilised in the compressor (15) of the respective exhaust gas turbocharger (13) for compressing charge air to be supplied to the cylinders (12),
wherein via an air lubrication system (16) air bubbles are expelled under a ship's bottom in order to reduce the ship's resistance,
**characterised**
**in that** exhaust gas of the cylinders (12) is supplied to the air lubrication system (16) and, via the nozzles (17) of the same, is expelled as air bubbles, namely exhaust gas bubbles, under the ship's bottom,
wherein respective internal combustion engine is coupled to the air lubrication system via a branch line (18) in such a manner that the exhaust gas of the cylinders can be supplied to the air lubrication system (16) and, via the nozzles (17) of the same, can be expelled as air bubbles, namely exhaust gas bubbles, under the ship's bottom.

7. The method according to Claim 6, **characterised in that** the at least one internal combustion engine (11) is a gas engine or a dual-fuel engine which is operated in a gas mode.

8. The method according to Claim 6 or 7, **characterised in that** in particular when the respective internal combustion engine (11) is operated with a load that is greater than a limit value, a waste gate (19) is opened and excess exhaust gas is branched off upstream of the turbine (14) of the respective exhaust gas turbocharger (13) and supplied to the air lubrication system (16).

9. The method according to Claim 8, **characterised in that** in particular when the waste gate (19) is closed, or when with opened waste gate (19) the branched-off exhaust gas quantity or its exhaust gas pressure is too low, air for the air lubrication system (16) is compressed via at least one compressor (20) of the air lubrication system (16).

## Revendications

1. Système de propulsion de navire (10),
comportant au moins un moteur à combustion interne (11),
dans lequel le moteur à combustion interne respectif (11) comporte des cylindres (12), dans lesquels des gaz d'échappement sont produits lors de la combustion du carburant,
dans lequel le moteur à combustion interne respectif (11) peut être utilisé avec au moins un turbocompresseur de gaz d'échappement (13), qui interagit avec une turbine (14) et un compresseur (15) de telle sorte que les gaz d'échappement des cylindres (12) dans la turbine (14) du turbocompresseur de gaz d'échappement (13) respectif puissent être détendus, et que lorsque les gaz d'échappement sont détendus dans la turbine (14) du turbocompresseur de gaz d'échappement respectif (13), l'énergie obtenue puisse être utilisée pour alimenter le compresseur (15) du turbocompresseur de gaz d'échappement respectif (13) pour entraîner l'air de suralimentation à fournir aux cylindres (12) en vue de la compression,
comportant un système de lubrification par l'air (16),
dans lequel le système de lubrification par l'air (16) comporte une pluralité de buses (17), par lesquelles des bulles d'air peuvent être éjectées sous le fond d'un navire afin de réduire la résistance du navire,
dans lequel le moteur à combustion interne respectif est couplé au système de lubrification par l'air par l'intermédiaire d'une conduite de dérivation (18) de telle sorte que les gaz d'échappement des cylindres puissent être amenés au système de lubrification par l'air (16) et puissent être éjectés via les buses (17) de même que les bulles d'air, à savoir les bulles de gaz d'échappement, sous le fond du navire,
**caractérisé en ce que**
la conduite de dérivation (18) est en liaison fonctionnelle avec une wastegate (19), de telle sorte que lorsque la wastegate (19) est fermée, la conduite de dérivation (18) est fermée, et que lorsque la wastegate (19) est ouverte, la conduite de dérivation (18) est ouverte afin d'alimenter l'excès de gaz d'échappement vers le système de lubrification par l'air (16).

2. Système de propulsion de navire selon la revendication 1, **caractérisé en ce que** le au moins un moteur à combustion interne (11) est un moteur à gaz ou un moteur bicarburant, qui fonctionne en mode gaz.

3. Système de propulsion de navire selon la revendication 1 ou 2, **caractérisé en ce que** la conduite de dérivation (18) bifurque en amont de la turbine (14) du turbocompresseur de gaz d'échappement respectif en direction du système de lubrification par l'air (16).

4. Système de propulsion de navire selon une des revendications 1 à 3, **caractérisé en ce que** le système de lubrification par l'air (16) comporte au moins un compresseur (20) pour comprimer l'air destiné au système de lubrification par l'air.

5. Système de propulsion de navire selon la revendication 4, **caractérisé en ce que** le au moins un compresseur (20) peut être actionné lorsque la wastegate (19) est fermée, ou lorsque la quantité de gaz d'échappement circulant via la conduite de dérivation (18) ou sa pression de gaz d'échappement est trop faible lorsque la wastegate (19) est ouverte.

6. Procédé d'exploitation d'un système de propulsion de navire (10) selon la revendication 1 à 5,
dans lequel dans les cylindres (12) d'au moins un moteur à combustion interne (11) le carburant est brûlé et des gaz d'échappement sont ainsi produits,
dans lequel les gaz d'échappement provenant des cylindres (12) sont détendus dans une turbine (14) d'au moins un turbocompresseur de gaz d'échappement (13) et lorsque les gaz d'échappement sont détendus dans la turbine (14) du turbocompresseur de gaz d'échappement respectif (13), on obtient de l'énergie qui est utilisée dans le turbocompresseur (15) de gaz d'échappement (13) correspondant pour comprimer l'air de suralimentation destiné aux cylindres (12),
dans lequel des bulles d'air sont expulsées sous le fond d'un navire via un système de lubrification par l'air (16) afin de réduire la résistance du navire,
**caractérisé en ce que**
les gaz d'échappement du cylindre (12) sont acheminés vers le système de lubrification par l'air (16) et sont éjectés sous le fond du navire via les buses (17) de celui-ci sous forme de bulles d'air, à savoir des bulles de gaz d'échappement, dans lequel le moteur à combustion interne respectif est couplé au système de lubrification par l'air via une conduite de dérivation (18) est couplé de telle sorte que les gaz d'échappement des cylindres puissent être amenés au système de lubrification à air (16) et puissent être éjectés sous le fond du navire via les buses (17) de celui-ci sous forme de bulles d'air, à savoir les bulles de gaz d'échappement.

7. Procédé selon la revendication 6, **caractérisé en ce que** le au moins un moteur à combustion interne (11) est un moteur à gaz ou un moteur bicarburant qui fonctionne en mode gaz.

8. Procédé selon la revendication 6 ou 7, **caractérisé en ce que** lorsque le moteur à combustion interne (11) respectif fonctionne avec une charge supérieure à une valeur limite, une wastegate (19) est ouverte et les gaz d'échappement en excès sont détournés en amont de la turbine (14) du turbocompresseur de gaz d'échappement respectif (13) et acheminés vers le système de lubrification par l'air (16).

9. Procédé selon la revendication 8, **caractérisé en ce que** lorsque la wastegate (19) est fermée, ou lorsque la quantité de gaz d'échappement détournés ou leur pression de gaz d'échappement est trop faible lorsque la wastegate (19) est ouverte, de l'air destiné au système de lubrification par l'air (16) est comprimé via au moins un compresseur (20) du système de lubrification par l'air (16).
